# EUROPEAN PATENT APPLICATION

(11) **EP 4 852 373 A1**
(43) Date of publication of application: **09.12.2026**
(21) Application number: 26176041.7
(22) Date of filing: 01.05.2026
(51) Int. Cl.: H04L 9/40, G06F 21/55, H04L 43/028, H04L 45/7459

(54) **SYSTEMS AND METHODS FOR CONTINUOUS ATTACK SURFACE MONITORING**

(30) Priority: 04.06.2025 US 202519228470
(71) Applicant: NetScout Systems, Inc., Westford, MA 01886 (US)
(72) Inventor: ABDULGHANI, AMIN ARSHAD, Westford, Massachusetts, 01886 (US); BARRETT, PAUL ALEXANDER, Westford, Massachusetts, 01886 (US)
(74) Representative: Marks & Clerk LLP

(57) **Abstract**

Systems and methods for monitoring network attack surfaces are disclosed. A system captures network traffic data and stores it in Bloom filters associated with time windows. The system analyzes the stored data to identify assets and their network activity, compares current activity with historical activity to detect changes in the attack surface, and generates alerts based on detected changes. The system implements a rolling window approach for managing time windows, maintains a Network Bill of Materials (NBOM) of active IP address and port combinations, updates the NBOM based on detected changes, and categorizes NBOM entries. The system also ages out inactive assets and their associated network activity after a predetermined period of inactivity.

## Description

### BACKGROUND

Network security is a critical concern for organizations as they face increasingly sophisticated cyber threats targeting their digital assets and infrastructure. Monitoring network activity and identifying potential vulnerabilities are essential tasks for maintaining a robust security posture. However, effectively tracking and analyzing the vast amount of network traffic data generated by modern enterprise environments presents significant challenges.

### BRIEF DESCRIPTION OF FIGURES

The accompanying drawings are not intended to be drawn to scale. Like reference numbers and designations in the various drawings indicate like elements. For purposes of clarity, not every component may be labeled in every drawing. In the drawings:
FIG. 1 illustrates a system for tracking network traffic using rolling windows with Bloom filters, according to aspects of the present disclosure.
FIG. 2 illustrates a system diagram for monitoring network attack surfaces using Bloom filters, according to an embodiment.
FIG. 3 illustrates a timeline diagram illustrating a rolling window approach for network traffic data collection and analysis, in accordance with example embodiments.
FIG. 4 illustrates a flowchart for monitoring network attack surfaces, according to aspects of the present disclosure.
FIG. 5 illustrates a flowchart for a rolling window approach to managing Bloom filters, in accordance with example embodiments.
FIG. 6 illustrates a process of IP range discovery, in accordance with example embodiments.

### DETAILED DESCRIPTION

Below are detailed descriptions of various concepts related to, and approaches, methods, apparatuses, and systems for implementing the various techniques described herein. The various concepts introduced above and discussed in greater detail below may be implemented in any of numerous ways, as the described concepts are not limited to any particular manner of implementation. Examples of specific implementations and applications are provided primarily for illustrative purposes.

This disclosure relates to techniques for monitoring network attack surfaces to detect changes and potential vulnerabilities in enterprise networks. Network attack surfaces can include both Internet-facing assets (North-South traffic) and internal critical assets (East-West traffic) that may be vulnerable to exploitation by malicious actors. Enterprises typically have many Internet-facing IP addresses and ports, as well as numerous internal servers and systems that handle sensitive data or critical business functions. These assets form the attack surface that needs to be continuously monitored for security purposes. Conventional approaches to monitoring attack surfaces often rely on periodic scans of public-facing IP addresses and ports to identify exposed services. However, periodic scanning approaches have significant limitations in detecting real-time changes to the attack surface. Scans are typically performed weekly or monthly, leaving long windows where new vulnerabilities could be introduced and exploited before being detected. Additionally, internal critical assets are often not included in these scans, leaving gaps in visibility of the overall attack surface. Existing monitoring solutions also struggle to efficiently track historical network activity patterns and identify anomalous changes that may indicate a security issue. The large volume of network traffic data generated by enterprise networks makes it challenging to store and analyze long-term activity trends.

The techniques described herein provide a system for continuous, real-time monitoring of both North-South and East-West attack surfaces using an efficient rolling window approach. An example system employs a sequence of Bloom filters, each associated with a specific time window, to compactly store network activity data. A network monitor captures traffic data from strategic points in the network, such as Internet Service Provider (ISP) links and internal network segments containing critical assets. The captured traffic data is analyzed to identify active assets, IP addresses, ports, and connection patterns.

The analyzed network activity data is stored in the sequence of Bloom filters for associated time windows and are combined to a single filter. A time manager implements a rolling window approach by adding new Bloom filters for the current time period and removing the oldest filters when a predefined window size is reached. The system compares current network activity against the historical patterns stored in the Bloom filters to detect changes in the attack surface. For example, the system identifies new Internet-facing services, changes in connection patterns to critical internal assets, or communication with new geographic locations. The detected changes are used to generate alerts and update a Network Bill of Materials (NBOM) that provides an overview of the current attack surface.

By employing this rolling window approach with Bloom filters, the techniques described herein provide efficient, continuous monitoring of large-scale enterprise networks. The system detects changes to both North-South and East-West attack surfaces in near real-time, allowing for rapid identification of potential vulnerabilities. The Bloom filter data structure enables compact storage of historical network activity data, facilitating long-term trend analysis. The techniques described herein improve on conventional periodic scanning approaches by providing constant visibility into the dynamic nature of enterprise attack surfaces. This can allow security teams to quickly respond to changes and maintain an accurate understanding of their network exposure.

The techniques described herein may be implemented as software instructions stored on non-transitory computer-readable media and executed by processors to perform the monitoring functions.

The systems and methods described herein can be implemented in various computing environments, including distributed and cloud-based architectures. In some implementations, the system can include multiple interconnected servers that can communicate over a network to process and analyze network traffic data. The servers can be configured to capture network traffic data from various points in the network, such as routers, switches, or dedicated network probes. The captured data can be stored in a distributed database system that can span multiple physical or virtual machines.

In some implementations, the system can use a load balancer to distribute incoming network traffic data across multiple servers for processing. The load balancer can use various algorithms, such as round-robin, least connections, or IP hash, to determine which server should handle each incoming data stream. This distribution of workload can allow the system to scale horizontally by adding more servers to handle increased network traffic volume.

Bloom filters used for storing network activity data can be implemented using distributed data structures. In some implementations, each Bloom filter can be sharded across multiple servers, with each server responsible for a subset of the filter's bit array. When querying a Bloom filter, the system can send the query to all shards in parallel and aggregate the results. This distributed approach can allow for faster query processing and improved scalability as the volume of network activity data grows. In some implementations, the system can use a distributed time series database to store historical network activity data.

The time series database can be optimized for storing and querying time-stamped data, such as network traffic patterns over time. The database can use various compression techniques to efficiently store large volumes of time series data, such as delta encoding or run-length encoding. The system can use this historical data to perform trend analysis and detect anomalies in network behavior over extended periods.

The combination of Bloom filters with rolling time windows introduces non-obvious technical advantages over conventional approaches by addressing critical limitations in prior art: prior rolling Bloom filter designs like those using master/slave sub-filters and dynamic cardinality estimation focus on single-machine applications rather than distributed network attack surface monitoring, failing to solve the synchronization challenges inherent in multi-node security systems; and (3) the temporal partitioning mechanism enables simultaneous comparison of current traffic patterns against multiple historical epochs (e.g., 21-day windows) without requiring full dataset scans - a capability absent in both static Bloom filters and prior time-series adaptations. This architecture achieves anomaly detection latency at scale while maintaining space efficiency, overcoming the longstanding tradeoff between monitoring granularity and storage costs.

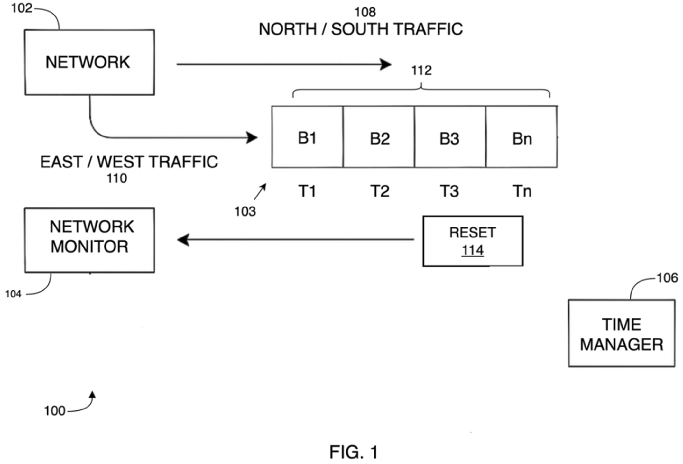

FIG. 1 illustrates a system 100 with a network monitoring arrangement. The system 100 includes a network perimeter 102, which represents the boundary between an enterprise's internal network and external networks. The system 100 shows two traffic paths: a north/south traffic data 108 and an east-west traffic data 110. The north/south traffic data 108 represents network communications between the internal network and external networks, while the east-west traffic data 110 represents communications within the internal network.

In some cases, the system 100 includes a plurality of Bloom filters 103. A Bloom filter is a probabilistic data structure used for efficient storage and querying of set membership. The system 100 includes a sequence of Bloom filters 103. Each Bloom filter is associated with a respective time window. A time window represents a specific period during which network activity data is collected and stored.

The system 100 includes a first Bloom filter B1 associated with a first-time window T1, a second Bloom filter B2 associated with a second time window T2, and additional Bloom filters Bn associated with corresponding time windows Tn. The sequence of Bloom filters allows the system 100 to maintain a historical record of network activity while efficiently managing data storage. In some cases, the system 100 includes a network monitor 104. The network monitor 104 is configured to capture network traffic data from both the north/south traffic data 108 and the east-west traffic data 110. The network monitor 104 processes the captured traffic data and interface with the sequence of Bloom filters 103. The system 100 also includes a time manager 106. The time manager 106 is configured to manage the time windows associated with the Bloom filters 103. The time manager 106 connects to the end of both Bloom filter sequences through connection paths.

In some cases, the system 100 includes elements 112 and 113. The elements 112 and 113 represent various components or data points within the network monitoring arrangement. A Bloom filter element X may be shown in the lower row of Bloom filters, potentially representing an old or expired Bloom filter. The system 100 also includes a window expiry and reset component 114. The window expiry and reset component 114 is responsible for managing the expiration of time windows and resetting Bloom filters as needed.

By incorporating these components, the network monitoring arrangement enables efficient capture, storage, and analysis of network traffic data across different time windows, facilitating the monitoring of both north-south and east-west network traffic patterns. In some cases, the system 100 includes a processor configured to analyze captured network traffic data to identify assets and their associated network activity. The processor may be part of the network monitor 104 or may be a separate component within the system. The processor may be configured to store identified assets and their network activity in the Bloom filters according to their respective time windows. For example, current network activity data is stored in the first Bloom filter B1 associated with the first-time window T1, while slightly older data is stored in the second Bloom filter B2 associated with the second time window T2. In some cases, the processor is configured to compare current network activity with historical network activity stored in the Bloom filters to detect changes in the network attack surface. This comparison involves analyzing the data stored in the sequence of Bloom filters to identify new or changed patterns of network activity. The processor generates alerts based on detected changes in the network attack surface. These alerts are triggered when the comparison reveals significant deviations from historical network activity patterns, potentially indicating new vulnerabilities or suspicious behavior.

By incorporating these components and functionalities, the network monitoring arrangement enables efficient capture, storage, and analysis of network traffic data across different time windows, facilitating the monitoring of both north-south and east-west network traffic patterns and the detection of potential security threats.

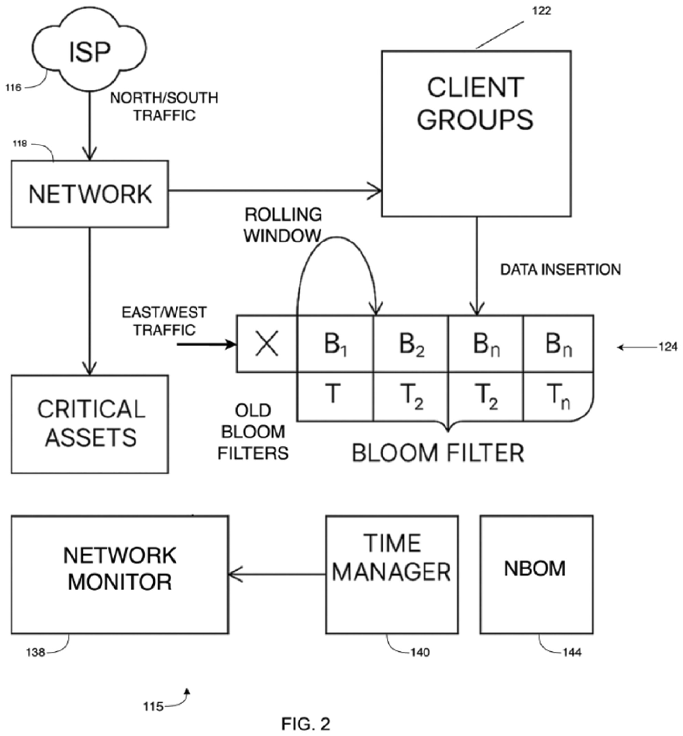

FIG. 2 illustrates a block diagram of a network monitoring system 115. The block diagram includes an ISP 116 connected to a network 118, which interfaces with multiple components for monitoring network activity. The network 118 connects to the client groups 122 through a rolling window connection path. The system implements a sequence of Bloom filters 124 arranged in rows. A Bloom filter is a probabilistic data structure used for efficient storage and querying of set membership. The sequence may contain the first Bloom filter B1, the second Bloom filter B2, and additional Bloom filters Bn, with corresponding time windows T1, T2, and Tn respectively. A time window represents a specific period during which network activity data is collected and stored. The old Bloom filters section is marked with an X at the beginning of the sequence.

The system 115 includes a network monitor 138. The network monitor 138 processes the network data and interface with the Bloom filter sequence. The system 115 also includes the time manager 140 that manages the temporal aspects of the monitoring system. The time manager 140 connects to the network monitor 138 to coordinate the timing of data collection and analysis. The arrangement enables monitoring of network traffic through the Bloom filter sequences while maintaining organization through specific time windows. The system processes and stores network traffic data according to the time windows associated with their respective Bloom filters, allowing for systematic monitoring of network activity between the ISP 116, network 118, and client groups 122.

The configuration allows for processing of network traffic while maintaining temporal organization through the time windows associated with their respective Bloom filters, with the network monitor 138 and time manager 140 working together to manage the data flow through the system. In some cases, the network monitor 138 captures both the north/south traffic and the east-west traffic from the network 118. The north/south traffic represents communications between the network 118 and external networks through the ISP 116, while the east-west traffic may represent communications within the network 118, potentially including traffic related to the critical assets.

The time manager 140 may implement the rolling-window approach for managing the time windows associated with the Bloom filters. This approach may involve adding a new Bloom filter for the current time window and removing the oldest Bloom filter when a predefined number of Bloom filters is reached. The removed Bloom filters are moved to the old Bloom filters section for potential future reference.

In some cases, the system uses the data insertion process to integrate the captured network activity data into the appropriate Bloom filter based on the current time window. This process allows for efficient storage and retrieval of historical network activity patterns related to the client groups 122 and other network components.

The system 115 implements a learn IP range functionality to dynamically identify and track the IP address ranges, which can be separate for clients and servers. This functionality allows the system 115 to adapt to changes in network configurations, such as those caused by dynamic IP address allocation through DHCP. In some cases, the system maintains a Network Bill of Materials (NBOM) 144, which may comprise a list of active IP address and port combinations that represent the current network attack surface. The NBOM 144 is continuously updated based on the detected changes in the network attack surface, with the NBOM 144 visible contents reflecting the current state of the network based on the data stored in the active Bloom filters.

The arrangement enables monitoring of network traffic through the Bloom filter sequences while maintaining organization through specific time windows. The system 115 processes and stores network traffic data according to the time windows associated with their respective Bloom filters, allowing for systematic monitoring of network activity between the ISP 116, network 118, and client groups 122.

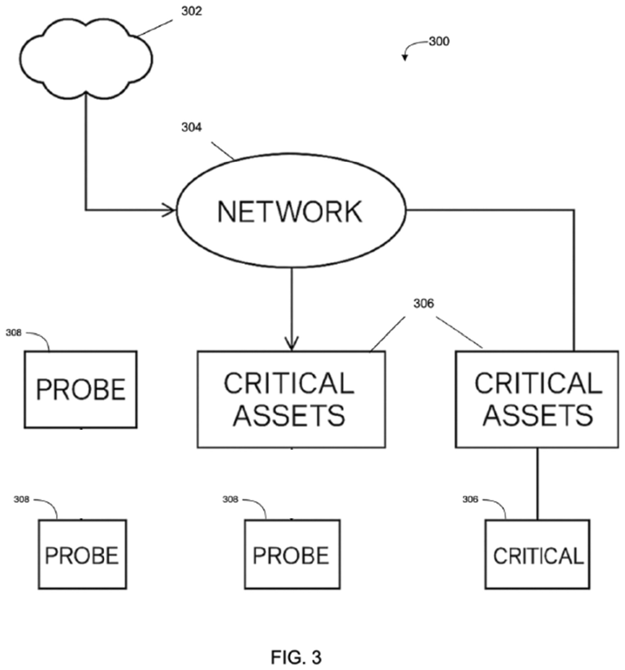

FIG. 3 illustrates a block diagram of a network monitoring system 300. The block diagram includes a cloud 302 connected to a network 304, which may interface with multiple components for monitoring network activity. The network 304 connects to multiple instances of the critical assets 306, allowing for monitoring of various network assets. The probe elements 308 are positioned at different points in the system to monitor network traffic.

The block diagram shows a hierarchical structure where the cloud 302 connects to the network 304, which then branches to multiple monitoring points. the probe elements 308 are connected to both the critical assets 306 and other network segments, enabling comprehensive traffic monitoring. In some cases, the system 300 implements the learn IP range functionality to dynamically identify and track the IP address ranges associated with the client groups. This functionality allows the system to adapt to changes in network configurations, such as those caused by dynamic IP address allocation through DHCP.

The system uses user-defined "host-groups" to limit analysis of traffic to specific areas of interest. For example, host-groups are defined for North/South interfaces with ISPs and for critical assets within the network. This approach allows for focused monitoring of high-priority network segments or assets. The arrangement facilitates monitoring of network activity through strategic placement of the probe elements 308 in relation to both the network 304 and the critical assets. The system enables observation of traffic patterns and network behavior through these interconnected components.

The probe elements 308 are positioned at different points in the system to monitor network traffic. These probe elements 308 are strategically placed to capture both north/south traffic and east-west traffic. The north/south traffic represents communications between the internal network and external networks, while the east-west traffic represents communications within the internal network. In some cases, the system maintains a North-South attack surface configuration list containing the public IP ranges operated by the enterprise. This list is used to define the scope of monitoring for external-facing assets and connections.

In some cases, the system implements specific rules for determining when a connection is considered active. For User Datagram Protocol (UDP) traffic, packets flow in both directions for a connection to be considered active. For Transmission Control Protocol (TCP) traffic, a full SYN/SYN-ACK/ACK handshake is completed for a connection to be declared as active. These rules help ensure that only established connections are recorded and monitored. In some cases the system may consider a connection that is only outbound.

In some cases, the system uses the data insertion process to integrate the captured and analyzed network data into the system's data storage and analysis components, particularly the Bloom filter elements within the rolling-window structure. This process allows for efficient storage and retrieval of historical network activity patterns related to the critical assets 306 and other network segments.

A time manager coordinates the storage and analysis of network activity data related to the critical assets 306 and other network components. The time manager ensures that the data is associated with the appropriate time windows and managed within the rolling window structure. By monitoring both external-facing assets and internal critical assets 306, the system maintains an up-to-date and comprehensive view of the network's attack surface. This approach allows for more effective detection of potential vulnerabilities and changes in network behavior that could indicate security risks.

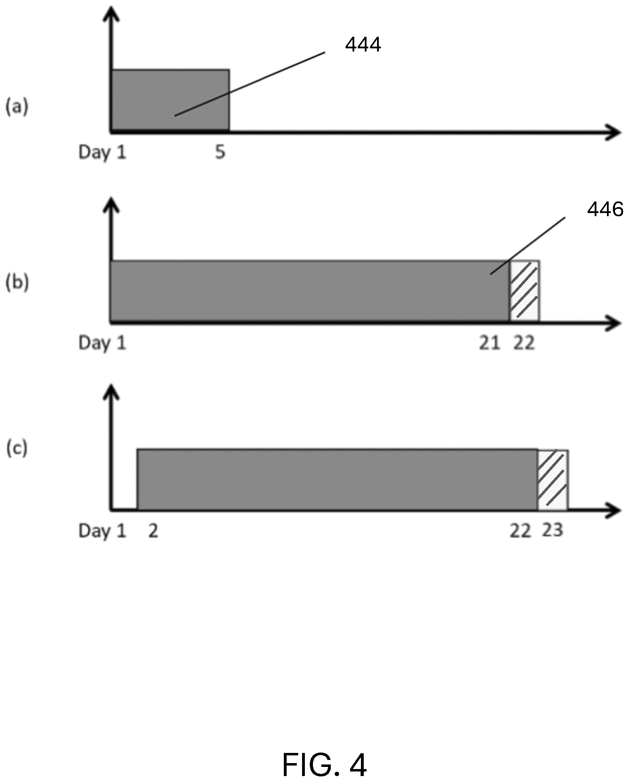

FIG. 4 depicts an example timeline representation of a rolling learning window process, showing three stages of data collection and analysis. The timeline representation includes a day 1-5 initial learning period (a), which represents the initial stage of data collection. During this period, a solid bar representing initial data collection 444 spans from Day 1 to Day 5, indicating the system's initial learning phase. In some cases, the timeline representation shows a day 22 rolling learning window complete (b). This stage is represented by the shaded bar representing initial data collection 444 extending from Day 1 to Day 21, with a cross-hatched bar representing new day data 446 positioned at Day 22. The cross-hatched bar representing new day data 446 indicates the completion of the rolling learning window.

The timeline representation also includes a day 23 learning window starts to roll (c). In this stage, the shaded bar representing initial data collection 444 may shift to span from Day 2 to Day 22, with the lightly shaded bar representing new day data 446 positioned at Day 23. This shift may illustrate how the learning window begins to roll forward, maintaining a consistent window of historical data while incorporating new information.

In some cases, the time manager implements a rolling window approach for managing the time windows associated with the Bloom filter elements. The rolling window approach allows the system to continuously update its view of network activity while maintaining historical context. The learning window duration is set to 21 days by default. This duration determines the number of Bloom filter elements maintained in the rolling-window structure at any given time.

In some cases, the rolling window approach comprises adding a new Bloom filter for the current time window and removing the oldest Bloom filter when a predefined number of Bloom filter elements is reached. For example, when the system reaches Day 22, as shown in the day 22 rolling learning window complete (b) stage, a new Bloom filter is added for the current day's data, shown hatched in (b). Subsequently, when the system reaches Day 23, as illustrated in the day 23 learning window starts to roll (c) stage, the oldest Bloom filter is removed, maintaining the 21-day window.

The rolling window structure allows the system to efficiently manage large volumes of network activity data while maintaining the ability to detect changes and anomalies in the network attack surface. The continuous addition of new data and removal of old data enables the system to adapt to evolving network conditions and provide up-to-date insights into potential security vulnerabilities.

The Bloom filter is used to efficiently track both the north/south traffic and the east-west traffic activity. The Bloom filter allows for compact storage of network activity data while enabling fast querying of historical information. This efficient data structure may facilitate the automatic removal of old information as new data is added to the system.

In some cases, the timeline representation may show the day 21 rolling learning window complete (b). This stage may be represented by the solid bar representing initial data collection 144 extending from Day 1 to Day 21, with the cross-hatched bar representing new day data 446 positioned at Day 22. The cross-hatched bar representing new day data 446 indicates the completion of the rolling learning window. At this point, the system has accumulated 21 days of network activity data stored across multiple Bloom filters, each associated with a specific time window.

The timeline representation also includes the day 23 learning window starts to roll (c). In this stage, the solid bar representing initial data collection 444 may shift to span from Day 2 to Day 22, with the hatched-line bar representing new day data 446 positioned at Day 23. This shift may illustrate how the learning window begins to roll forward, maintaining a consistent window of historical data while incorporating new information.

The default age-out period for inactive IP/port combinations is set to 21 days. This duration determines the number of Bloom filter elements maintained in the rolling-window structure at any given time. However, in some cases, this age-out period is configurable, allowing administrators to adjust the historical data retention based on specific monitoring requirements.

The rolling-window structure facilitates the comparison of current network activity with historical patterns. For example, the alerting comparison functionality analyzes the data stored in the active Bloom filter elements to identify new or changed patterns of network activity that indicates potential security threats. In some cases, the data insertion process is used to integrate newly captured network activity data into the appropriate Bloom filter elements. This process ensures that the rolling window contains the most recent network activity information for analysis and comparison. The window expiry and reset mechanism manages the lifecycle of network activity data within the rolling-window structure. As older data expires and is moved to the old Bloom filters, the system adjusts its comparison baseline to maintain relevance in detecting potential security issues.

By implementing this rolling window process, the system provides continuous monitoring of the network attack surface, including both external-facing assets and internal critical assets. This approach allows for timely detection of changes in the network environment, enabling rapid identification and response to potential security vulnerabilities or suspicious activity patterns.

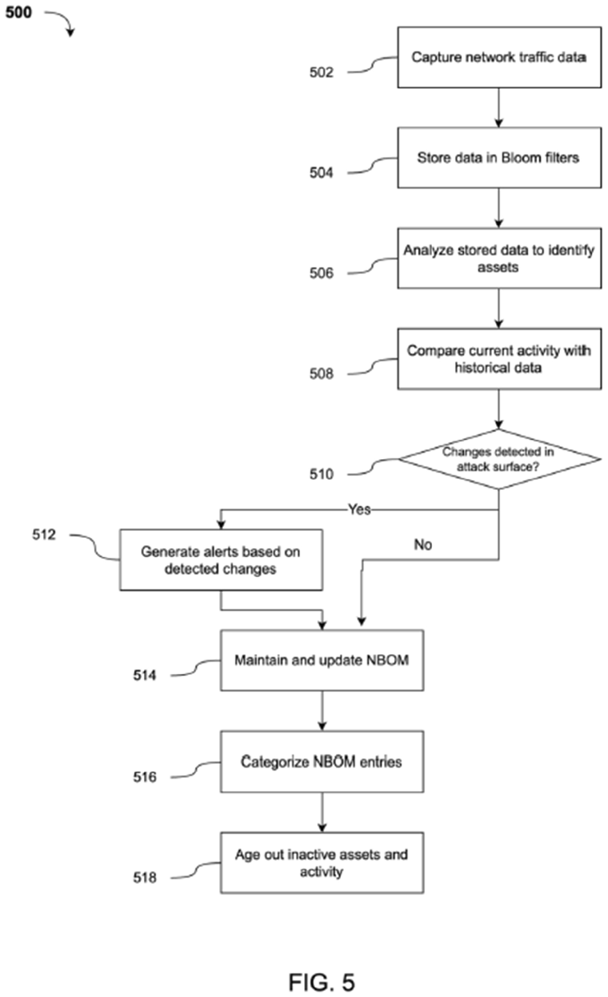

FIG. 5 illustrates a flowchart of a method 500 for monitoring and analyzing network traffic data. The method 500 may be implemented as instructions stored on a non-transitory computer-readable medium and executed by a processor. The method 500 begins with a step 502, where network traffic data is captured. In some cases, the network monitor captures the network traffic data from both the north/south traffic and the east-west traffic paths. The probe elements are used to collect this data from various points in the network.

The method 500 proceeds to a step 504, where the captured data is stored in Bloom filters. Each Bloom filter is associated with a specific time window, allowing for efficient storage and retrieval of historical network activity data. The time manager coordinates the storage of data in the appropriate Bloom filters based on their respective time windows. Each element in a Bloom filter can represent multiple values, which are encoded into a single Bloom filter entry. If it is desirable to subsequently determine whether a set of related values are encoded in the Bloom filter, the same encoding is applied and the Bloom filter is searched to see if the new entry is already present. Hence, the Bloom filter only stores encoded data, not the actual data that was encoded to form the entries. Bloom filters result in a very fast search time, but may very rarely, yield a false positive match. The data encoded in the Bloom filters is as follows:

### Examples of North-South Encoding

| | |
|---|---|
| HostIP:Direction | 100.1.2.3:Inbound |
| HostIP:Direction:Application: Port | 100.2.2.3:Outbound:HTTP:80 |
| HostIP:Direction:GeoLocation | 100.2.2.4: Inbound: USA |

### Examples of East-West Encoding: The network data that gets encoded may depend on the selection the user has configured for the critical asset

| | |
|---|---|
| HostGroup:HostIP:Direction:Application:Port | DNSServers:10.2.2.3:Inbound:DNS:53 |
| HostGroup:Direction:GeoLocation | Database:: Outbound: USA |
| HostGroup:HostIPRange:Direction:Application :Port | Database:10.2.1.0/28:Inbound:Oracle:1521: |
| HostGroup:HostName:Direction:Application:Port | Database:hr.company.com:Inbound:Oracle: 1521 |

In some cases, the method 500 includes a step 506, where the stored data is analyzed to identify assets. This analysis involves examining the network traffic data to determine active IP addresses, ports, and connection patterns. The processor is configured to perform this analysis on the data stored in the Bloom filters.

The method 500 then moves to a step 508, where the current activity is compared with historical data. This comparison involves analyzing the data stored in the sequence of Bloom filters to identify new or changed patterns of network activity. The alerting comparison functionality is used to perform this comparison.

In some cases, the method 500 includes a step 510, which represents a decision point to determine if changes are detected in the network attack surface. If changes are detected, the method 500 proceeds to a step 512, where alerts may be generated based on the detected changes. These alerts notify network administrators of potential security issues or anomalies in network behavior.

A server can be configured to maintain a list of all inbound and outbound activity for the N/S and E/W IP address ranges. Activity can be stored in two tables (see Table 1 and Table 2 below). In some cases, the alert analysis occurs every hour. Alerts are generated when the current activity on the attack surface is different from the learned activity. Alerting can be enabled or disabled at any time. For example, a user may wish to wait seven days before alerting is enabled or never alert at all.

**Table 1: IP/Port combination tracking**

| Most recent activity | Host IP | Server Port | Application | Direction | Status |
|---|---|---|---|---|---|
| 03/10/2025 | 66.94.9.200 | 443 | HTTPS | Outbound | |
| 09:10 am | | | | | |
| 03/10/2025 | 66.94.9.131 | 53 | DNS | Inbound | Verify |
| 09:10 am | | | | | |
| 03/10/2025 | 66.94.9.90 | 443 | HTTPS | Inbound | Monitor |
| 09:10 am | | | | | |

**Table 2: Geolocation tracking**

| Most recent activity | Geolocation | Direction | Status |
|---|---|---|---|
| 03/10/2025 | Russia | Outbound | |
| 09:10 am | | | |
| 03/10/2025 | China | Inbound | Verify |
| 09:10 am | | | |
| 03/10/2025 | United States | Inbound | Monitor |
| 09:10 am | | | |

A blank status entry or "CLEAR" means normal and expected activity. A Status of "Verify" means that the activity is new and is yet to be acknowledged by the user. A status of "Monitor" means that the user believes the activity has now been blocked, but an alert should be raised if activity is still seen.

In some cases, changes in network activity on the attack surface product an alert. A "New Host" alert means a previously silent public facing IP address has started to generate or accept sessions. A "New Application" alert means an active public facing IP address has started to generate or accept sessions using a new application. A "New Geolocation" means an active public facing IP address has started to generate or accept sessions to/from a new geographical area, e.g., a country or city.

In some cases, the Network Bill of Materials (NBOM) represents a list of all public facing IP/port combinations that have either accepted inbound connections or allowed outbound connections. The N/S NBOM is shown as a table in an attack surface view and provides an at-a-glance view of the current N/S NBOM. This list of inbound connections is important because it represents the Internet attack surface of an enterprise.

A simple mechanism is provided for the user to track changes in the NBOM. Any new connections are highlighted in the NBOM list so the user can see that something has changed. Entries that are Highlighted indicate that they require further action. The user can take one of the following three actions for a highlighted NBOM entry. One, clear the highlighting if the change is legitimate, e.g. a new legitimate service has been launched. Two, leave the entry highlighted until the change has been fully evaluated and fixed if needed (Verify status). Three, hide the entry if the change was unauthorized, but has now been fixed, e.g. someone opened an unauthorized port in a firewall (Monitor status). If a hidden change is still present the next day, it will be changed to a highlighted entry again to show the fix didn't work as expected. This is treated as a change and a fresh alert will be generated. Like all tables in the user interface, the NBOM table will provide search and sort capabilities.

In some cases, the service tracks network activity of host groups marked as critical assets. The user can choose whether to track inbound and outbound connections to and from the asset. The alerting logic is the same as for the N/S, with the same ability to enable and disable alerts. The concept of an NBOM view can also be extended to the E/W attack surface. If an IP/port combination is inactive for a long period of time, it is aged-out and removed from the list of normal activity. This is a function of the rolling-window process.

The method 500 then continues to a step 514, where the NBOM is maintained and updated. The processor is configured to maintain the NBOM, which comprises a list of active IP address and port combinations. In some cases, the processor updates the NBOM based on the detected changes in the network attack surface. This step involves adding new entries for newly detected active IP addresses and ports or removing entries for connections that are no longer active.

In some cases, the method 500 includes a step 516, where NBOM entries are categorized. The processor is configured to categorize entries in the NBOM as verified, monitored, or requiring further action. This categorization helps prioritize potential security issues and guide further investigation. Entries with verify represent known and approved network activity. The user has to take action whether it is authorized or not. Entries categorized as monitored indicate activity that requires ongoing observation. Monitor means the issue is fixed and should be continued to be monitored for any repeats. Entries requiring further action represent newly detected or unclassified network activity that needs immediate investigation.

The method 500 concludes with a step 518, where inactive assets and activity are aged out of the system. This step helps maintain the efficiency of the Bloom filters and NBOM by removing outdated or irrelevant data. The window expiry and reset mechanism are used to manage this process, ensuring that the system maintains a current and relevant view of the network attack surface.

By implementing this method 500, the system provides continuous monitoring of the network attack surface, enabling timely detection of changes and potential security vulnerabilities. The maintenance and categorization of the NBOM allow for efficient management of network assets and prioritization of security efforts.

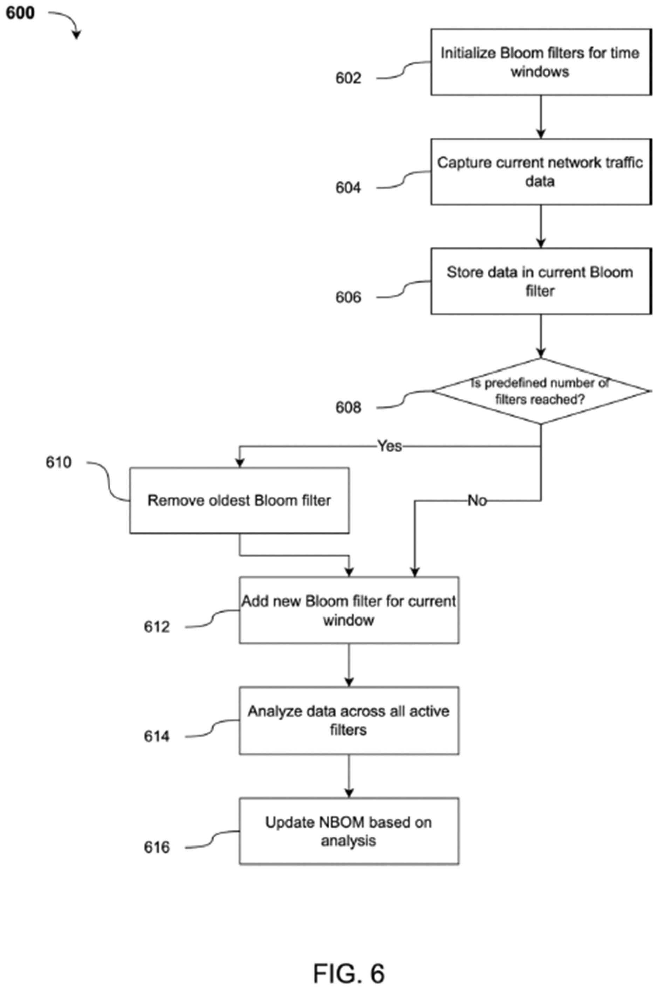

FIG. 6 illustrates a flowchart of a method 600 for managing Bloom filters in a time-windowed network monitoring system. The method 600 is implemented as instructions stored on a non-transitory computer-readable medium and executed by a processor. The method 600 begins with a step 602, where Bloom filters are initialized for time windows. This initialization involves creating a set of Bloom filter elements, each associated with a specific time window for storing network activity data.

The method 600 proceeds to a step 604, where current network traffic data is captured. In some cases, the network monitor captures the network traffic data from both the north/south traffic and the east-west traffic paths. Following the data capture, the method 600 includes a step 606, where the captured data is stored in the current Bloom filter. This step involves using a data insertion process to integrate the captured network activity data into the appropriate blook filter element based on the current time window.

The method 600 then moves to a step 608, which represents a decision point to determine if a predefined number of filters is reached. This step is part of the rolling-window approach for managing the time windows associated with the Bloom filter elements. If the predefined number of filters is reached, the method 600 proceeds to a step 610, where the oldest Bloom filter is removed. This step helps maintain the efficiency of the system by removing outdated data.

The method 600 then continues to a step 612, where a new Bloom filter is added for the current window. This step ensures that the system maintains a consistent window of historical data while incorporating new information. In some cases, the method 600 includes a step 614, where data is analyzed across all active filters. This analysis involves comparing current network activity with historical patterns stored in the Bloom filter elements to detect changes or anomalies.

The method 600 concludes with a step 616, where the Network Bill of Materials (NBOM) is updated based on the analysis. This step involves updating the list of active IP address and port combinations to reflect the current state of the network attack surface. In some cases, the alert analysis occurs every hour. During each analysis cycle, the system compares the current network activity data with the historical data stored in the Bloom filter elements to detect changes in the network attack surface that could indicate potential security issues.

The method 600 may also incorporate geolocation tracking for network activity. In such an implementation, the Bloom filter elements store geolocation data along with other network activity information, allowing the system to detect connections from new countries to or from public facing IP addresses.

By implementing this method 600, the system provides continuous monitoring and management of network activity data, enabling efficient storage, analysis, and detection of potential security vulnerabilities in the network attack surface.

Implementations of the subject matter and the operations described in this specification can be implemented in digital electronic circuitry, or in computer software embodied on a tangible medium, firmware, or hardware, including the structures disclosed in this specification and their structural equivalents, or in combinations of one or more of them. Implementations of the subject matter described in this specification can be implemented as one or more computer programs, e.g., one or more components of computer program instructions, encoded on computer storage medium for execution by, or to control the operation of, data processing apparatus. The program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can include a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

Such computing systems may include clients and servers. A client and server are generally remote from each other and typically interact through a communication network. The relationship of client and server arises by virtue of computer programs running on the respective computers and having a client-server relationship to each other. In some implementations, a server transmits data (e.g., an HTML page) to a client device (e.g., for purposes of displaying data to and receiving input from a user interacting with the client device). Data generated at the client device (e.g., a result of an interaction, computation, or any other event or computation) can be received from the client device at the server, and vice versa.

While this specification contains many specific implementation details, these should not be construed as limitations on the scope of any inventions or of what may be claimed, but rather as descriptions of features specific to particular implementations of the systems and methods described herein. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In some cases, the actions recited in the claims can be performed in a different order and still achieve desirable results. In addition, the processes depicted in the accompanying figures do not necessarily require the particular order shown, or sequential order, to achieve desirable results.

The systems and methods described herein may be embodied in other specific forms without departing from the characteristics thereof. Although the examples provided may be useful for various implementations, the systems and methods described herein may be applied to other environments. The foregoing implementations are illustrative rather than limiting of the described systems and methods. The scope of the systems and methods described herein may thus be indicated by the appended claims, rather than the foregoing description, and changes that come within the meaning and range of equivalency of the claims are embraced therein.

## Claims

1. A system for monitoring network attack surfaces, the system comprising:
a network monitor configured to capture network traffic data;
a plurality of Bloom filters, each Bloom filter associated with a respective time window;
a time manager configured to manage the time windows; and
a processor configured to:
analyze the captured network traffic data to identify assets and their associated network activity;
store the network activity of identified assets in the plurality of Bloom filters according to their respective time windows;
compare current network activity with historical network activity stored in the plurality of Bloom filters to detect changes in the network attack surface; and
generate alerts based on detected changes in the network attack surface.

2. The system of claim 1, wherein the network monitor is configured to capture both north-south and east-west network traffic data.

3. The system of claim 1, wherein the time manager is configured to implement a rolling window approach for managing the time windows associated with the Bloom filters;
wherein, optionally, the rolling window approach comprises adding a new Bloom filter for the current time window and removing an oldest Bloom filter when a predefined number of Bloom filters is reached.

4. The system of claim 1, wherein the processor is further configured to:
maintain a Network Bill of Materials (NBOM) comprising a list of active IP address and port combinations, wherein the NBOM is independent of the plurality of Bloom filters; and
update the NBOM based on the detected changes in the network attack surface.

5. The system of claim 1, wherein the processor is further configured to analyze the captured network traffic data to identify assets through real-time extraction of active IP/port combinations from packet headers.

6. The system of claim 1, wherein the processor is further configured to age out inactive assets and their associated network activity from the Bloom filters after a predetermined period of inactivity.

7. A method for monitoring network attack surfaces, the method comprising:
capturing network traffic data;
storing the captured network traffic data in a plurality of Bloom filters, each Bloom filter associated with a respective time window;
analyzing the stored network traffic data to identify assets and their associated network activity;
comparing current network activity with historical network activity stored in the plurality of Bloom filters to detect changes in the network attack surface; and
generating alerts based on detected changes in the network attack surface.

8. The method of claim 7, wherein capturing network traffic data comprises capturing both north-south and east-west network traffic data.

9. The method of claim 7, further comprising implementing a rolling window approach for managing the time windows associated with the plurality of Bloom filters;
wherein, optionally, implementing the rolling window approach comprises adding a new Bloom filter for the current time window and removing an oldest Bloom filter when a predefined number of Bloom filters is reached.

10. The method of claim 7, further comprising tracking inbound and outbound data traffic for each host group separately;
wherein, optionally, alerts are generated based on detected changes in the network attack surface when statistical deviation exceeds a configured threshold.

11. The method of claim 7, further comprising aging out inactive assets and their associated network activity from the Bloom filters after a predetermined period of inactivity.

12. A non-transitory computer-readable medium storing instructions that, when executed by a processor, cause the processor to perform operations for monitoring network attack surfaces, the operations comprising:
capturing network traffic data;
storing the captured network traffic data in a plurality of Bloom filters, each Bloom filter associated with a respective time window;
analyzing the stored network traffic data to identify assets and their associated network activity;
comparing current network activity with historical network activity stored in the plurality of Bloom filters to detect changes in the network attack surface; and
generating alerts based on detected changes in the network attack surface.

13. The non-transitory computer-readable medium of claim 12, wherein capturing network traffic data comprises capturing both north-south and east-west network traffic data, wherein north-south and east-west network traffic data contains cryptographically hashed source/destination IP addresses and ports.

14. The non-transitory computer-readable medium of claim 12, wherein the operations further comprise implementing a rolling window approach for managing the time windows associated with the plurality of Bloom filters;
wherein, optionally, implementing the rolling window approach comprises adding a new Bloom filter for the current time window and removing an oldest Bloom filter when a predefined number of Bloom filters is reached.

15. The non-transitory computer-readable medium of claim 12, wherein the operations further comprise:
maintaining a Network Bill of Materials (NBOM) comprising a list of active IP address and port combinations; and
updating the NBOM based on the detected changes in the network attack surface;
wherein, optionally, the operations further comprise categorizing entries in the NBOM as verified, monitored, or requiring further action.

## Amended claims

### Amended claims in accordance with Rule 137(2) EPC.

1. A system for monitoring network attack surfaces, the system comprising:
a network monitor (138) configured to capture network traffic data;
a plurality of Bloom filters (124), each Bloom filter associated with a respective time window;
a time manager (140) configured to manage the time windows; and
a processor configured to:
analyze the captured network traffic data to identify assets and their associated network activity;
store the network activity of identified assets in the plurality of Bloom filters (124) according to their respective time windows;
compare current network activity with historical network activity stored in the plurality of Bloom filters (124) to detect changes in the network attack surface; and
generate alerts based on detected changes in the network attack surface.

2. The system of claim 1, wherein the network monitor (138) is configured to capture both north-south and east-west network traffic data.

3. The system of claim 1, wherein the time manager (140) is configured to implement a rolling window approach for managing the time windows associated with the Bloom filters (124);
wherein, optionally, the rolling window approach comprises adding a new Bloom filter for the current time window and removing an oldest Bloom filter when a predefined number of Bloom filters (124) is reached.

4. The system of claim 1, wherein the processor is further configured to:
maintain a Network Bill of Materials (NBOM) comprising a list of active IP address and port combinations, wherein the NBOM is independent of the plurality of Bloom filters (124); and
update the NBOM based on the detected changes in the network attack surface.

5. The system of claim 1, wherein the processor is further configured to analyze the captured network traffic data to identify assets through real-time extraction of active IP/port combinations from packet headers.

6. The system of claim 1, wherein the processor is further configured to age out inactive assets and their associated network activity from the Bloom filters (124) after a predetermined period of inactivity.

7. A method for monitoring network attack surfaces, the method comprising:
capturing network traffic data;
storing the captured network traffic data in a plurality of Bloom filters (124), each Bloom filter associated with a respective time window;
analyzing the stored network traffic data to identify assets and their associated network activity;
comparing current network activity with historical network activity stored in the plurality of Bloom filters (124) to detect changes in the network attack surface; and
generating alerts based on detected changes in the network attack surface.

8. The method of claim 7, wherein capturing network traffic data comprises capturing both north-south and east-west network traffic data.

9. The method of claim 7, further comprising implementing a rolling window approach for managing the time windows associated with the plurality of Bloom filters (124);
wherein, optionally, implementing the rolling window approach comprises adding a new Bloom filter for the current time window and removing an oldest Bloom filter when a predefined number of Bloom filters (124) is reached.

10. The method of claim 7, further comprising tracking inbound and outbound data traffic for each host group separately;
wherein, optionally, alerts are generated based on detected changes in the network attack surface when statistical deviation exceeds a configured threshold.

11. The method of claim 7, further comprising aging out inactive assets and their associated network activity from the Bloom filters (124) after a predetermined period of inactivity.

12. A non-transitory computer-readable medium storing instructions that, when executed by a processor, cause the processor to perform operations for monitoring network attack surfaces, the operations comprising:
capturing network traffic data;
storing the captured network traffic data in a plurality of Bloom filters (124), each Bloom filter associated with a respective time window;
analyzing the stored network traffic data to identify assets and their associated network activity;
comparing current network activity with historical network activity stored in the plurality of Bloom filters (124) to detect changes in the network attack surface; and
generating alerts based on detected changes in the network attack surface.

13. The non-transitory computer-readable medium of claim 12, wherein capturing network traffic data comprises capturing both north-south and east-west network traffic data, wherein north-south and east-west network traffic data contains cryptographically hashed source/destination IP addresses and ports.

14. The non-transitory computer-readable medium of claim 12, wherein the operations further comprise implementing a rolling window approach for managing the time windows associated with the plurality of Bloom filters (124);
wherein, optionally, implementing the rolling window approach comprises adding a new Bloom filter for the current time window and removing an oldest Bloom filter when a predefined number of Bloom filters (124) is reached.

15. The non-transitory computer-readable medium of claim 12, wherein the operations further comprise:
maintaining a Network Bill of Materials (NBOM) comprising a list of active IP address and port combinations; and
updating the NBOM based on the detected changes in the network attack surface;
wherein, optionally, the operations further comprise categorizing entries in the NBOM as verified, monitored, or requiring further action.
